(19) Europäisches Patentamt
European Patent Office
Office européen des brevets

(11) Veröffentlichungsnummer: **0 001 545**
**B1**

(12) **EUROPÄISCHE PATENTSCHRIFT**

(45) Veröffentlichungstag der Patentschrift: **15.07.81**

(21) Anmeldenummer: **78100556.6**

(22) Anmeldetag: **31.07.78**

(51) Int. Cl.³: **A 22 C 13/00,** B 29 D 9/08, B 32 B 1/08, B 32 B 23/04

(54) **Schlauchförmige Hülle, insbesondere Verpackungshülle, z.B. Wursthülle auf Basis von Cellulosehydrat und Verfahren zu ihrer Herstellung.**

(30) Priorität: **05.08.77 LU 77930**
**16.05.78 LU 79665**

(43) Veröffentlichungstag der Anmeldung:
**02.05.79 Patentblatt 79/9**

(45) Bekanntmachung des Hinweises auf die Patenterteilung:
**15.07.81 Patentblatt 81/28**

(84) Benannte Vertragsstaaten:
**BE DE FR LU**

(56) Entgegenhaltungen:
**DE - A - 2 162 204**
**DE - A - 2 512 994**
**DE - A - 2 512 995**
**DE - B - 1 302 384**
**FR - A - 2 212 098**
**FR - A - 2 224 088**
**GB - A - 1 444 442**
**US - A - 3 887 713**

(73) Patentinhaber: **HOECHST AKTIENGESELLSCHAFT**
**Postfach 80 03 20**
**D-6230 Frankfurt/Main 80 (DE)**

(72) Erfinder: **Hammer, Klaus-Dieter, Dr.**
**Kettelerstrasse 20**
**D-6500 Mainz 21 (DE)**
Erfinder: **Schröder, Martin**
**Lützowstrasse 7**
**D-6200 Wiesbaden 1 (DE)**
Erfinder: **Pietruck, Horst, Dr.**
**Raiffeisenstrasse 11**
**D-6501 Schwabenheim (DE)**
Erfinder: **Bytzek, Max**
**Birkenweg 13**
**D-6201 Naurod (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 545 B1

Schlauchförmige Hülle, insbes. Verpackungshülle, z.B. Wursthülle, auf Basis von Cellulosehydrat und Verfahren zu ihrer Herstellung.

Die Erfindung betrifft eine schlauchförmige bevorzugt faserverstärkte Verpackungshülle von der im Oberbegriff des Anspruchs 1 genannten Art sowie ein Verfahren zur Herstellung der schlauchförmigen Verpackungshüllen.

Cellulosehydratschläuche mit wasserdampfundurchlässigem Filmüberzug aus synthetischem thermoplastischem Vinylidenchloridcopolymerisat auf ihrer Innenseite werden in großer Menge als künstliche Wursthüllen verwendet und sind für diesen Zweck deshalb geeignet, weil sie sich durch starken Schrumpf im Verlauf ihrer bestimmungsgemäßen Verwendung als Wursthüllen dem Füllgut gut anpassen können und so stets zu Würsten führen, deren Haut dem Füllgut prall anliegt und den Würsten dadurch ansehnliches Aussehen verleihen.

Mit diesem Vorteil der bekannten künstlichen Wursthüllen geht gleichzeitig ein großer Mangel einher, nämlich eine starke Einreiß- und Stoßanfälligkeit künstlicher Hüllen von Würsten.

In der US-PS 4,002,712, ist ein zur Verwendung als künstliche Wursthülle geeigneter Schlauch auf Basis von durch chemische Mittel modifiziertem Cellulosehydrat beschrieben, der auch bei Verlust seines Anteils an wasserextrahierbarem chemischem Weichmachungsmittel noch die Geschmeidigkeit aufweist, die ein Cellulosehydratschlauch besitzt. Auch nach einem noch nicht zum Stand der Technik gehörenden Vorschlag (deutsche Patentanmeldung P 26 54 427.4) ist ein zur Verwendung als künstliche Wursthülle geeigneter, mittels sogenannter permanenter chemischer Weichmachungsmittel teilweise weichgemachter Schlauch beschrieben, der auch nach Verlust seines Anteils an wasserlöslichem chemischem Weichmachungsmittel die Geschmeidigkeit eines Cellulosehydratschlauchs aufweist oder sogar eine bessere besitzt.

In einem weiteren noch nicht zum Stande der Technik gehörenden Vorschlag sind zur Verwendung als künstliche Wursthüllen geeignete Schläuche auf Basis von Cellulosehydrat beschrieben, die N-Methylolcarbamat-Endgruppen aufweisende chemische Verbindungen mit chemisch fester Bindung enthalten.

Auch diese beschriebenen Schläuche weisen nach Verlust von extrahierbarem sekundärem chemischem Weichmachungsmittel, das bedingt durch das Herstellungsverfahren des Schlauchs in seiner Wandung enthalten ist, noch gute Geschmeidigkeit auf.

Der quantitative Verlust an wasserextrahierbarem chemischem Weichmachungsmittel bei der bestimmungsgemäßen Verwendung der Schlauchhüllen als künstliche Wursthüllen, beispielsweise bei dem Brühvorgang der Würste in heißem Wasser, löst einen Schrumpf der Schlauchhüllen von ca. 12 bis 15% aus; dadurch entsteht ein hoher Innendruck im Füllguthohlraum der Wursthülle bei gleichzeitiger Versprödung der Cellulosehydratschicht derselben, die durch den wasserdampfundurchlässigen Filmüberzug auf der Schlauchinnenseite vom feuchtigkeitsenthaltenden Wurstgut getrennt ist. Die Folge davon ist ein unerwünschtes starkes Ein- und Weiterreißen der Wursthüllen beim Anschneiden der Würste, wobei sich in unerwünschter Weise das Wurstgut aus der Schnittfläche herausdrängt. Die Stoßanfälligkeit derartiger Würste beim Transport ist ein weiterer Nachteil der den bekannten sowie beschriebenen künstlichen Wursthüllen auf Basis von Cellulosehydrat mit einem wasserdampfundurchlässigen Filmüberzug auf ihrer Immenseite anhaften.

Durch die Verwendung des in dem genannten US-Patent beschriebenen Schlauchs sowie von Schläuchen gemäß den noch nicht zum Stand der Technik gehörenden Beschreibungen ist es zwar möglich, diese Nachteile teilweise zu vermeiden, um diese ganz auszuschalten, müßten die genannten Schläuche jedoch eine derartig große Menge an nicht extrahierbarem chemischem Weichmachungsmittel enthalten, daß dadurch zwangsläufig eine unerwünschte Verschlechterung der mechanischen Eigenschaften des Schlauchs eintreten würde.

Der Erfindung liegt deshalb die Aufgabe zugrunde, schlauchförmige bevorzugt faserverstärkte Verpackungshüllen, die insbesondere zur Verwendung als künstliche Wursthülle geeignet sind, auf Basis von gegebenenfalls chemische Weichmachungsmittel enthaltendem Cellulosehydrat mit wasser und wasserdampfundurchlässigem Filmüberzug aus synthetischem thermoplastischem Polymerisat auf der Innenseite, mit den für die Verwendung als künstliche Wursthülle erwünschten guten Eigenschaften eines Cellulosehydratschlauchs vorzugschlagen, die die geschilderten Nachteile nicht aufweisen und mit denen es möglich ist, Würste herzustellen, bei denen die Wursthülle nicht stoßempfindlich ist und bei denen beim Anschneiden der Wurst im wesentlichen kein Ein- oder Weiterreißen der künstlichen Wursthaut eintritt.

Eine weitere Aufgabe der Erfindung ist es, ein Herstellungsverfahren für schlauchförmige Verpackungshüllen mit den angestrebten Eigenschaften vorzuschlagen.

Die vorgenannte Aufgabe wird gelöst durch die schlauchförmige bevorzugt faserverstärkte Verpackungshülle mit den im Anspruch 1 genannten Merkmalen sowie durch das im Anspruch 21 angegebene Verfahren zu ihrer Herstellung. Die Unteransprüche 2 bis 20 sowie 22 und 23 betreffen weitere Ausbildungen der Verpackungshülle bzw. des Verfahrens.

Erfindungsgemäß ausgebildete schlauchförmige bevorzugt faserverstärkte Hüllen werden nachfolgend auch kurz als "Schlauch" bezeichnet.

Als "Tragerschlauch" wird das bevorzugt faserverstärkte Substrat auf Basis von Cellulosehydrat bezeichnet, das der schlauchförmigen Hülle gemäß der Erfindung zugrundeliegt.

Die den wasser- sowie wasserdampfundurchlässigen Filmüberzug bildenden synthetischen thermoplastischen Polymerisate, insbesondere bevorzugt Copolymerisate, auf Vinylidenchloridbasis sowie die die durchlässige Schicht aufbauenden Copolymerisate bestehen aus makromolekularen Ketten aus sich in diesen regelmäßig oder unregelmäßig wiederholenden chemischen Molekularstruktureinheiten, die auf polymerisierte bzw. copolymerisierte Monomere entsprechender Struktur zurückgehen, d.h. durch Polymerisation bzw. Copolymerisation eines Gemischs copolymerisierbarer Monomerer entstehen.

Die qualitative chemische Charakterisierung eines Copolymerisats durch die Angabe, daß es auf bestimmt angegebene Monomere zurückgeht, ist gleichbedeutend mit der Formulierung, daß das Copolymerisat herstellbar ist durch Copolymerisation eines qualitativ bestimmt angegebenen Monomerengemischs.

Die vorgenannte Erläuterung gilt sowohl für Polymerisate bzw. Copolymerisate, die den Filmüberzug bzw. die durchlässige Schicht der Schlauchhülle bilden, als auch zur qualitativen und quantitativen Konkretisierung des chemischen Aufbaus der in den verfahrensgemäß verwendeten wäßrigen Dispersionen dispergierten Copolymerisate.

Bevorzugt enthält der Trägerschlauch auf Basis von Cellulosehydrat herstellungsbedingt und in an sich bekannter Weise Wasser und zusätzlich sekundäres chemisches Weichmachungsmittel, beispielsweise Glycerin oder Triglykol, oder sekundäres chemisches Weichmachungsmittel auf Basis von Polyglykol mit einem Molekulargewicht im Bereich von 600 bis 5000, vorzugsweise 1000 bis 4000, allein oder im Gemisch mit Glycerin und/oder Triglykol. Bei der Verwendung von Schläuchen, die niedermolekulares sekundäres chemisches Weichmachungsmittel, wie beispielsweise Glycerin oder Triglykol, enthalten, wird der Weichmacheranteil während der Wurstherstellung im wesentlichen quantitativ aus der Schlauchhülle herausgelöst. Da die genannten niedermolekularen sekundären chemischen Weichmachungsmittel weniger leicht bzw. weniger schnell bei der Wurstherstellung aus der Hülle herausgelöst werden, läßt sich durch entsprechende Kombination der genannten sekundären chemischen Weichmachungsmittel das Schrumpfverhalten des Schlauchs bei Verwendung als künstliche Wursthülle bei der Herstellung von Würsten in gewissen Grenzen variieren und dem Druck im Innern der Wurst anpassen. Die Variationsbreite läßt sich noch vergrößern, wenn man von Schläuchen auf Basis von chemisch modifiziertem Cellulosehydrat ausgeht, die eine vorbestimmte Menge von durch Wasser nicht extrahierbarem (d.h. permanentem) chemischem Weichmachungsmittel enthalten.

Der im Rahmen der Erfindungsbeschreibung gebrauchte Ausdruck "Tragerschlauch auf Basis von Cellulosehydrat" soll definitionsgemäß Schläuche bzw. Trägerschläuche umfassen, die in ihrer chemischen Zusammensetzung einen Aufbau entsprechend a) bis i) aufweisen und demgemäß jeweils bestehen aus:

a) Cellulosehydrat oder
b) Cellulosehydrat und Wasser oder
c) Cellulosehydrat und sekundärem chemischem Weichmachungsmittel, wie beispielsweise Glycerin, oder
d) Cellulosehydrat, Wasser und sekundärem chemischem Weichmachungsmittel oder
e) chemisch modifiziertem Cellulosehydrat mit aus diesem durch Wasser nicht extrahierbarem chemischem Weichmachungsmittel oder
f) Mischung aus Cellulosehydrat und chemisch modifiziertem Cellulosehydrat nach e) oder
g) chemisch modifiziertem Cellulosehydrat nach e) und Wasser oder
h) chemisch modifiziertem Cellulosehydrat nach e), Wasser sowie sekundärem chemischem Weichmachungsmittel oder
i) Mischungen aus Cellulosehydrat, chemisch modifiziertem Cellulosehydrat nach e) und Wasser sowie gegebenenfalls sekundärem chemischem Weichmachungsmittel.

Ein Schlauch gemäß e) enthält außer chemisch modifiziertem Cellulosehydrat eine für seine Eigenschaften nicht wesentliche Menge an Cellulosehydrat ohne chemische Modifizierung.

Bevorzugt sind dabei Trägerschläuche des chemischen Aufbaus gemäß a) bis i), die faserverstärkt sind, d.h. solche, die in ihrer Wand eine Fasermatrix, bevorzugt eine auf Basis von feinfaserigem Papier, aufweisen.

Der unterbrechungsfrei ausgebildete, für Wasser und Wasserdampf undurchlässige Filmüberzug auf der Innenseite der schlauchförmigen Hülle besteht aus synthetischem thermoplastischem Polymerisat, insbesondere Copolymerisat, auf Vinylidenchloridbasis mit mengenmäßig überwiegendem Vinylidenchloridanteil, bezogen auf das Gesamtgewicht des Copolymerisats. Derartige wasser- sowie wasserdampfundurchlässige Filmüberzüge auf der Oberfläche von Schläuchen aus Cellulosehydrat sind in der Literatur beschrieben (US-PSen 3,108,017; 2,961,323; 2,748,027; 2,570,478; GB-PS 1 201 830).

Insbesondere bevorzugte Vinylidenchloridcopolymerisate zur Ausbildung wasserdampf- sowie wasserundurchlässiger Filmüberzüge auf der Schlauchinnenseite sind dabei solche bekannten, die auf copolymerisiertes Vinylidenchlorid, copolymerisierten Acrylsäureester oder Methacrylsäureester,

copolymerisierte Acrylsäure oder Methacrylsäure sowie copolymerisiertes Acrylnitril zurückgehen, wobei ganz besonders bevorzugt ein Copolymerisat ist, das zu 88 Gew.-% aus copolymerisiertem Vinylidenchlorid, zu 1,5 Gew.-% aus copolymerisiertem Acrylsäuremethylester, zu 3 Gew.-% aus copolymerisierter Acrylsäure und zu 7,5 Gew.-% aus Acrylnitril besteht. Die gewichtsprozentualen Angaben beziehen sich dabei jeweils auf das Gesamtgewicht des Copolymerisats.

Der wasserdampf- und wasserundurchlässige Überzug aus synthetischem thermoplastischem Polymerisat, insbesondere Copolymerisat, ist in sich geschlossen durchbrechungsfrei ausgebildet und verhindert den Durchtritt von Wasser nicht nur infolge seines chemischen Aufbaus, sondern auch dadurch, daß er keine Durchbrechungen aufweist.

Gegebenenfalls ist zwischen Innenseite des Trägerschlauchs auf Basis von Cellulosehydrat und Filmüberzug aus thermoplastischem synthetischem Copolymerisat haftvermittelndes chemisches Material vorgesehen.

Derartige Haftschichten zwischen Filmüberzügen des genannten chemischen Aufbaus und der Trägerschlauchoberfläche auf Basis von Cellulosehydrat sind in der Literatur beschrieben und bestehen beispielsweise aus Harnstofformaldehyd-Vorkondensat, Melaminformaldehyd-Vorkondensat oder Epichlorhydrin-Polyamid-Polyamin-Vorkondensat oder Guanidin-ureat.

Gegebenenfalls ist auch zwischen der Trägerschlauchoberfläche und der durchlässigen Schicht aus elastischem Polymerisat auf der Schlauchaußenseite haftvermittelndes chemisches Mittel, beispielsweise Harnstofformaldehyd-Vorkondensat, Melaminformaldehyd-Vorkondensat oder Epichlorhydrin-Polyamid-Polyamin-Vorkondensat oder Guanidin-ureat, vorgesehen.

Die auf der Außenseite der schlauchförmigen Hülle angeordnete durchlässige Schicht ist stofflich auf Basis elastischer Copolymerisate aufgebaut oder besteht aus einem Copolymerisatgemenge.

Im Rahmen der Erfindungsbeschreibung sollen unter elastischen Copolymerisaten solche verstanden werden, für die die Bezeichnung "Elastomere" üblich ist (Definition des Begriffs "Elastomere" siehe Bildmeyer, "Textbook of Polymer Chemistry", New York, 1957, Seite 154; Houwink, "Elastomers and Plastomers", New York-Amsterdam, Elsevier; Römpp, "Chemie-Lexikon").

Erfindungsgemäß geeignete elastische Copolymerisate sind neben anderen physikalischen Kenndaten bzw. Eigenschaften durch gummiähnliches Zug-Dehnungs-Verhalten (Zug-Dehnungs-Charakteristik) aus ihnen herstellbarer Formgebilde, beispielsweise selbsttragender Folien, als Prüfkörper charakterisiert; diese Eigenschaft ist insbesondere erfindungswesentlich.

Die Schicht auf der Außenseite der Schlauchhülle gilt als durchlässig, wenn sie den Durchtritt von Wasser oder wäßriger Lösungen nicht behindert.

Die erfindungsgemäß angestrebten Eigenschaften der schlauchförmigen Hülle sind insbesondere von den Eigenschaften der Schicht auf ihrer Außenseite abhängig, die sich als Folge des chemischstofflichen Aufbaus derselben sowie ihrer räumlich-strukturellen Ausbildung ergeben. Für die räumlich-strukturelle Ausbildung der Schicht auf der Außenseite der schlauchförmigen Hülle ist es wesentlich, daß die wäßrige Copolymerisatdispersion, die bei der Herstellung der erfindungsgemäßen Schlauchhüllen zur Verwendung gelangt, dadurch charakterisiert ist, daß der mengenmäßig überwiegende Teil der dispergierten Copolymerisatteilchen eine Teilchengröße von höchstens 0,08 $\mu$m, bevorzugt eine Teilchengröße von 0,05 $\mu$m und kleiner, aufweist. Zur Ausbildung erfindungsgemäß geeigneter durchlässiger Schichten enthalten die Copolymerisatdispersionen Copolymerisatteilchen einer Teilchengröße größer als 0,08 $\mu$m — wenn überhaupt — nur in einer solchen Menge, daß dadurch die Ausbildung durchlässiger Schichten gemäß Definition nicht verhindert wird.

Das erfinderische Gesamtkonzept umfaßt folgende gegenständlichen Erfindungsvarianten, die sich voneinander in chemischstofflichen Aufbau ihrer jeweiligen durchlässigen Schichten auf der Außenseite wie nachfolgend angegeben unterscheiden.

Die erste gegenständliche Erfindungsvariante ist die in Anspruch 3, vorzugsweise in Anspruch 4, insbesondere in Anspruch 5 genannte Verpackungshülle.

Die zweite gegenständliche Erfindungsvariante entspricht der im Anspruch 10, in bevorzugter Ausführung der in Anspruch 11 angegeben Verpackungshülle.

Die dritte gegenständliche Erfindungsvariante entspricht der im Anspruch 6 genannten Verpackungshülle, wo das Copolymerisat zum mengenmäß geringeren Anteil aus (copolymerisiertem) Acrylsäureester, insbesondere Acrylsäurebutylester, Methacrylsäureester, insbesondere Methacrylsäurebutylester, Acrylsäure, Methacrylsäure, Acrylnitril, Styrol oder Mischungen derselben aufgebaut ist.

Gemäß einer vierten gegenständlichen Erfindungsvariante besteht die durchlässige Schicht auf der Schlauchhüllenaußenseite aus einem Copolymerisatgemenge nach Anspruch 12, dessen erste Komponente, die den mengenmäßig überwiegenden Anteil des Copolymerisats, bezogen auf sein Gesamtgewicht, bildet, aus elastischem Copolymerisat gemäß der ersten oder der zweiten gegenständlichen Erfindungsvariante besteht und dessen zweite Komponente, die den mengenmäßig geringeren Anteil des Gemenges, bezogen auf sein Gesamtgewicht, darstellt, die elastischen Copolymerisate gemäß der dritten gegenständlichen Erfindungsvariante umfaßt.

Bevorzugt sind dabei Schichten, die aus Copolymerisatgemenge bestehen, die insgesamt zu 80 Gew.-% aus erster Komponente und zu insgesamt 20 Gew.-% aus zweiter Komponente, jeweils gemäß vorstehend angegebener qualitativer Konkretisierung, bestehen.

Die gewichtsprozentualen Angaben beziehen sich dabei jeweils auf das Gesamtgewicht des Copolymerisatgemenges.

Die Schichten gemäß der zweiten gegenständlichen Erfindungsvariante sind insbesondere dadurch charakterisiert, daß sie weich sind, ohne jedoch zum Blocken zu neigen.

Die durchlässige Schicht auf der Außenseite der Schlauchhülle hat eine Dicke, die einem Flächengewicht im Bereich von insgesamt 0,5 bis 8 g, bevorzugt insgesamt 1 bis 5 g, Copolymerisat bzw. Copolymerisatgemenge pro $m^2$ Substratfläche entspricht.

Die durchlässige Schicht auf der Trägerschlauchaußenseite ist raumkörperlich-strukturell in der Weise ausgebildet, daß sie eine Vielzahl unregelmäßig ausgebildeter sehr kleiner Durchbrechungen in regelloser Anordnung zueinander aufweist; die Schicht bedeckt demnach die Hüllenaußenseite nicht flächenmäßig geschlossen. Die durchlässige Schicht kann dementsprechend auch als aus einer großen Vielzahl diskreter regellos zueinander angeordneter, bezüglich Form und Größe unregelmäßig ausgebildeter individueller Schichtstücke aus elastischem Copolymerisat bzw. Copolymerisatgemenge bestehend aufgebaut betrachtet werden. Die individuellen Schichtstücke haben dabei im statistischen Mittel die gleiche Dicke. Diese kleinen Durchbrechungen stellen für Flüssigkeiten durchlässige Bereiche dar.

Es wird angenommen, daß die Mehrheit der die Schicht bildenden partiellen Schichtstücke sich teilweise bis in die Unterlage, d.h. in den Schlauch auf Basis von Cellulosehydrat, hinein ausdehnen, d.h. in diesem im oberflächennahen Bereich elastisches Copolymerisat in feiner Verteilung eingelagert ist.

Die gemäß der ersten Erfindungsvariante die Schicht bildenden Copolymerisate enthalten als Alkoholkomponente der auf copolymerisierte Acrylsäureester oder Methacrylsäureester zurückgehenden Struktureinheiten Alkohole mit im Bereich von 2 bis 10 Kohlenstoffatomen, insbesondere bevorzugt 4 Kohlenstoffatomen.

Die dritten gegenständliche Erfindungsvariante ist dadurch charakterisiert, daß die die Schicht bildenden Copolymerisate zum mengenmäßig überwiegenden Anteil auf copolymerisierte Monomere der allgemeinen Formel

$$CH_2 = CH - \underset{\displaystyle R}{\underset{|}{C}} = CH_2$$

zurückgehen, in der R Wasserstoff, Chlor, oder eine Methylgruppe bedeutet. Insbesondere bestehen die Copolymerisate zum mengenmäßig überwiegenden Anteil, bezogen auf das Gesamtgewicht derselben, aus (copolymerisiertem) Butadien und zum mengenmäßig geringeren Anteil aus (copolymerisiertem) Acrylsäureester, Methacrylsäureester, bevorzugt Acrylsäurebutylester bzw. Methacrylsäurebutylester, Acrylsäure, Methacrylsäure, Acrylnitril sowie Styrol oder Mischungen derselben. Ein ebenfalls bevorzugtes Copolymerisat besteht zum mengenmäßig überwiegenden Anteil aus (copolymerisiertem) Butadien und zum mengenmäßig geringeren Anteil aus Isopren oder Chloropren oder Mischungen derselben.

Gemäß Definition soll der Begriff elastische Copolymerisate, die aus einem Gemenge aus einem oder mehreren chemisch unterschiedlichen elastischen Copolymerisaten mit einem synthetischen thermoplastischen, nicht elastischen Polymerisat, beispielsweise einem Vinylidenchloridcopolymerisat mit überwiegendem Anteil an Vinylidenchlorid, bestehen, gleichfalls gelten, sofern das Copolymerisatgemenge zur Ausbildung durchlässiger Schichten gemäß Definition befähigt ist. Die gewichtsprozentualen Angaben beziehen sich jeweils auf das Gesamtgewicht des Copolymerisats.

Die durchlässige Schicht auf der Außenseite der schlauchförmigen Hülle bzw. die zu der Herstellung derselben verwendete wäßrige Copolymerisatdispersion kann Hilfsstoffe, beispielsweise kolloidale Kieselsäure, als Abstandhalter in der Schicht sowie Wachse, Silikone, Polyäthylen oder Polyäthylenwachs in dispergierter Form als Trennmittel in Mengen im Bereich von 0,1 bis 10 Gew.-%, vorzugsweise 0,2 bis 4 Gew.-%, bezogen auf das Gesamtgewicht Copolymerisat in der Schicht bzw. den dispergierten Anteil der wässrigen Dispersion, enthalten. Wesentlich ist, daß die Hilfsstoffe die Ausbildung einer durchlässigen Schicht nicht beeinträchtigen.

Gemäß einer der gegenständlichen Erfindungsvarianten besteht die durchlässige Schicht auf der Schlauchhüllenaußenseite aus dem elastischen Copolymerisat, das im Anspruch 10 genannt wird, insbesondere bevorzugt aus dem im Anspruch 11 beschriebenen Copolymerisat.

Schichten aus genannten Copolymerisaten sind durch besondere Weichheit ausgezeichnet, ohne daß sie jedoch zum Blocken neigen.

Gemäß der zweiten Erfindungsvariante besteht die durchlässige Schicht auf der Schlauchaußenseite aus einem Gemenge elastischer Copolymerisate, wie es im Anspruch 13 angegeben ist. Vorzugsweise wird in diesem Gemenge aus Copolymerisaten als erstes Copolymerisat gemäß Anspruch 11 verwendet.

Das zweitgenannte Copolymerisat des Copolymerisatgemenges ist herstellbar durch Copolymerisation eines Gemischs copolymerisierbarer Monomerer, das zu insgesamt 1 bis 2 Gew.-% aus Acrylsäure, Methacrylsäure oder Mischungen beider, insbesondere bevorzugt jedoch Acrylsäure, zu höchstens 15 Gew.-% aus Acrylnitril und zu wenigstens insgesamt 83 Gew.-% aus Monomeren der allgemeinen Formel

$$CH_2=HC-\overset{\displaystyle R}{\overset{|}{C}}=CH_2$$

in der R Wasserstoff, Chlor, oder eine $CH_3$-Gruppe ist, oder einer Mischung der genannten Monomeren, jeweils bezogen auf das Gesamtgewicht des Monomerengemischs, insbesondere bevorzugt jedoch Butadien, besteht.

Zur Herstellung erfindungsgemäßer Schlauchhüllen geeignete wäßrige elastische Copolymerisatdispersionen enthalten insgesamt 0,5 bis 30 Gew.-%, bevorzugt insgesamt 2 bis 20 Gew.-%, dispergiertes Copolymerisat, bezogen auf das Gesamtgewicht der wäßrigen Dispersion.

I) Wäßrige Copolymerisatdispersion, bei denen das dispergierte Copolymerisat nach einem der in Ansprüchen 2 bis 4 genannten Copolymerisaten besteht.

II) Wäßrige Copolymerisatdispersion, deren dispergierter Copolymerisatanteil aus einem Copolymerisatgemenge besteht, das zu wenigstens 70 Gew.-% aus Copolymerisat gemaß der Gruppe I und bis zu 30 Gew.-% aus elastischem Copolymerisat besteht, das zum mengenmäßig überwiegenden Anteil des Copolymerisats aus aliphatischen Dienen entsprechend der allgemeinen Formel

$$CH_2=HC-\overset{\displaystyle R}{\overset{|}{C}}=CH_2$$

in der R Wasserstoff, Chlor, sowie eine Alkyl-, insbesondere $CH_3$-Gruppe sein kann, zurückgeht, wobei insbesondere Butadien bevorzugt ist. Das zweite Copolymerisat des Copolymerisatgemenges gemäß II kann zum mengenmäßig geringeren Anteil, bezogen auf sein Gesamtgewicht, aus Dienen obengenannter Formel aufgebaut sein, die sich in ihrer chemischen Struktur von dem den überwiegenden Anteil des Polymerisats bildenden unterscheiden. Der mengenmäßig geringere Anteil des zweiten Copolymerisats des Copolymerisatgemenges gemäß II kann aber auch aus Acrylsäure, Methacrylsäure, Acrylsäureester, Methacrylsäureester, Acrylnitril sowie Styrol aufgebaut sein.

Bei einer bevorzugten wäßrigen Dispersion der Gruppe II besteht der zweite Anteil des Copolymerisatgemenges aus Copolymerisat, das zu wenigstens 80 Gew.-% aus aliphatischen Dienen der obengenannten allgemeinen Formel, insbesondere Butadien, und zu insgesamt höchstens 20 Gew.-% aus Acrylnitril, Styrol oder Mischungen derselben aufgebaut ist.

III) Geeignete wäßrige Copolymerisatdispersionen können auch Copolymerisatgemenge umfassen, die außer den unter I und/oder II genannten Copolymerisaten zusätzlich thermoplastische synthetische Polymerisate, insbesondere Vinylidenchloridcopolymerisate mit überwiegendem Vinylidenchloridanteil, enthalten.

Die wäßrigen Copolymerisatdispersionen bestehen dabei aus einem in den Ansprüchen genannten elastischen Copolymerisat und enthalten das nicht elastische Copolymerisat in einer Menge bis zu höchstens 30 Gew.-%, bezogen auf das Gesamtgewicht des Copolymerisatgemenges.

IV) Wäßrige Copolymerisatdispersionen, deren dispergierter Anteil aus elastischem Copolymerisat besteht, wie es im Anspruch 10 genannt wird. Eine ganz besonders bevorzugte Dispersion der Gruppe IV ist dabei eine solche, bei der das dispergierte Copolymerisat zu 80 Gew.-% aus Acrylsäurebutylester, zu 28 Gew.-% aus Acrylsäureäthylester und zu 2 Gew.-% aus Acrylsäure besteht.

V) Wäßrige Copolymerisatdispersionen, bei denen das dispergierte Copolymerisat aus einem Copolymerisatgemenge besteht, wie es im Anspruch 13 genannt wird. Vorzugsweise enthält das Gemenge ein elastomeres Copolymerisat mit den im Anspruch 11 genannten Monomereinheiten.

Insbesondere bevorzugt ist dabei innerhalb der Gruppe V eine wäßrige Copolymerisatdispersion, deren dispergierter Anteil aus einem Copolymerisatgemenge besteht, das zu wenigstens 80 Gew.-%, bezogen auf das Gesamtgewicht des Gemenges, aus Copolymerisat aus 70 Gew.-% Acrylsäurebutylester, 28 Gew.-% Acrylsäureäthylester und 2 Gew.-%, jeweils bezogen auf das Gesamtgewicht des Copolymerisats, Acrylsäure besteht und das bis zu 20 Gew.-% bezogen auf das Gesamtgewicht des Copolymerisatgemenges, aus einem zweiten Copolymerisat besteht, wie es in Anspruch 14 oder 15 genannt wird.

Die wäßrigen Copolymerisatdispersionen gemäß I bis V können bekannte chemische Dispersionshilfsmittel enthalten, die im Vergleich zu der insgesamt dispergierten Menge Copolymerisat zu vernachlässigen sind und keinen Einfluß auf die Eigenschaften des Verfahrenserzeugnisses haben.

Es ist auch möglich, daß die wäßrigen Copolymerisatdispersionen zur Weichmachung von Cellulosehydrat befähigte und dafür bekannte, in Wasser lösliche chemische Mittel, sogenannte Weichmachungsmittel, in einer Menge im Bereich von 0,5 bis 15 Gew.-%, bezogen auf das Gesamtgewicht der Dispersion, gelöst enthalten. Geeignete chemische Weichmachungsmittel sind beispielsweise Glycerin, Triglykol oder Polyglykol.

Derartige chemische Weichmachungsmittel gelöst enthaltende wäßrige Copolymerisatdispersionen sind herstellbar, indem man in die wäßrigen Ausgangscopolymerisatdispersionen eine entsprechende Menge genannter chemischer Weichmachungsmittel durch Einrühren in diese löst.

Die geeigneten wäßrigen Copolymerisatdispersionen werden in einer derartigen Menge auf die

Schlauchaußenseite zur Einwirkung gebracht, daß die Außenseite der schlauchförmigen Hülle eine durchlässige Schicht auf Basis von elastischem Copolymerisat aufweist, deren Dicke einem Flächengewicht im Bereich von 0,5 bis 8 g, insbesondere bevorzugt 1 bis 5 g pro $m^2$ Trägeroberfläche entspricht.

Die geeigneten wäßrigen Copolymerisatdispersionen sind dabei dadurch charakterisiert, daß der mengenmäßig überwiegende Anteil der dispergierten Copolymerisatteilchen eine Teilchengröße von höchstens 0,08 $\mu$m, bevorzugt 0,05 $\mu$m und kleiner, aufweist. Die Dispersion enthält keine dispergierten Copolymerisatteilchen, die größer als 0,08 $\mu$m sind in Mengen, die die Ausbildung durchlässiger Schichten infolge ihrer Teilchengröße verhindern.

Nachfolgend wird die Herstellung der erfindungsgemäßen Schlauchhülle beispielhaft erläutert.

Zunächst wird in an sich bekannter Weise ein Schlauch auf Basis von Cellulosehydrat, der ca. 22% Glycerin als sekundäres chemisches Weichmachungsmittel enthält, hergestellt. Der Schlauch wird dann auf seiner Innenseite mit haftvermittelndem chemischem Mittel, beispielsweise Epichlorhydrin-Polyamid-Polyamin, versehen (beschrieben in GB-PS 1 201 830; US-PS 2,901,358; US-PS 3,378,379; GB-PS 1 417 419).

Auf die Außenseite des Schlauchs bringt man haftvermittelndes chemisches Mittel des vorgenannten chemischen Aufbaus auf, indem man den Schlauch durch eine Wanne führt, die mit einer Flüssigkeit gefüllt ist, die das genannte chemische Haftmittel in einer Konzentration im Bereich zwischen 0,5 und 5 Gew.-%, bevorzugt 0,6 bis 2,5 Gew.-%, enthält, und den Schlauch dann trocknet.

Auf die Innenseite des Schlauchs bringt man dann nach einer in der GB-PS 1 201 830 oder der US-PS 2,901,358 oder der US-PS 3,378,379 beschriebenen Methode einen Filmüberzug aus wasserdampfundurchlässigem synthetischem Vinilidenchloridcopolymerisat auf, das beispielsweise in der US-PS 3,144,425 beschrieben ist.

Den Schlauch mit wasserdampfundurchlässigem Filmüberzug auf seiner Innenseite führt man dann fortlaufend mit gleichbleibender Geschwindigkeit durch eine Wanne, die mit wäßriger Copolymerisatdispersion gefüllt ist, die beispielsweise einen Anteil von 10 Gew.-% elastisches Copolymerisat, bezogen auf das Gesamtgewicht der Dispersion, aufweist, wobei das dispergierte Copolymerisat beispielsweise eine solches ist, das zu 70 Gew.-% aus copolymerisiertem Acrylsäurebutylester, zu 28 Gew.-% aus copolymerisiertem Acrylsäureäthylester und zu 2 Gew.-% aus copolymerisierter Acrylsäure, jeweils bezogen auf das Gesamtgewicht des Copolymerisats, besteht. Der mengenmäßig überwiegende Anteil der dispergierten Copolymerisatteilchen der Dispersion weist eine Teilchengröße von 0,05 $\mu$m und kleiner auf.

Die Dispersion enthält, gelöst im Dispersionsmittel, beispeilsweise Glycerin als sekundäres chemisches Weichmachungsmittel in einer Menge von beispielsweise 5 Gew.-%, bezogen auf das Gesamtgewicht der Copolymerisatdispersion.

Nach Verlassen der mit der Dispersion befüllten Wanne wird der Schlauch getrocknet, beispielsweise dadurch, daß man ihn durch einen Trockentunnel hindurchführt, in dessen Innenraum eine Temperatur herrscht, die hinreicht, um das Dispersionsmittel zu vertreiben. Bei diesem Trockenvorgang verliert der Trägerschlauch einen Anteil seines Wassergehalts, so daß er nach dem Trockenvorgang Wasser im Bereich von 10 bis 12% aufweist. Der Cellulosehydratträgerschlauch weist dabei einen Gehalt an sekundärem Weichmachungsmittel, beispielsweise von Glycerin, von 22% auf.

Der Glyceringehalt des Trägerschlauchs ergibt sich als Ergebnis der bekannten Verfahrensbedingungen bei der Herstellung von Schlaüchen aus Cellulosehydrat dadurch, daß man den Cellulosehydratschlauch nach seiner Herstellung durch eine wäßrige Glycerinlösung hindurchführt, wobei der Schlauch je nach Verweilzeit in der Lösung einen angestrebten Anteil an sekundärem Weichmachungsmittel enthält.

Der getrocknete Schlauch auf Basis von Cellulosehydrat mit einem wasserdampfundurchlässigen Filmüberzug auf seiner Innenseite und einer durchlässigen Schicht aus elastischem Polymerisat auf seiner Außenseite wird dann mit Wasser befeuchtet, beispielsweise dadurch, daß man ihn mit Wasser besprüht. Nach dem Befeuchtungsvorgang hat der Schlauch einen Wassergehalt im Bereich von 6 bis 20%, vorzugsweise einen solchen im Bereich von 8 bis 12%, bezogen auf das Gewicht des Trägerschlauchs.

In der Figur der Zeichnung ist schematisch und im Querschnitt ein erfindungsgemäßer Schlauch beispielhaft dargestellt. Die Ziffer 1 bedeutet den Trägerschlauch aus Cellulosehydrat, 2 den Filmüberzug aus thermoplastischem Polymerisat auf der Schlauchinnenseite, 3 die durchlässige Schicht aus elastischem Copolymerisat auf der Schlauchaußenseite, und 4 ist der Schlauchhohlraum. Aus Gründen zeichnerischer Vereinfachung ist haftvermittelndes chemisches Mittel zwischen Schicht 3 und Trägerschlauch 1 bzw. Filmüberzug 2 und Trägerschlauch 1 nicht zeichnerisch dargestellt.

## Beispiel 1

Ein Viskoseschlauch vom Kaliber 60 mit einer Faserpapiereinlage in seiner Wand als Matrix wird in ein bekanntes Fällbad gesponnen, regeneriert, gewaschen und durch Einwirkung von wäßriger Lösung, die als sekundäres Weichmachungsmittel.

Glycerin enthält, weichgemacht und auf seiner Innen- und Außenseite mit einem chemischen Verankerungsmittel

(Melamin-Formaldehyd-Vorkondensat)-präpariert.

Die Beschichtung wird in einem Trockner vorgenommen, der aus einem auf- und einem absteigenden Teil besteht und oben eine Umlenkwalze besitzt. Oberhalb des absteigenden Trocknerteils ist eine ringförmige Sprühdüse angebracht, die von einem Acrylglasgehäuse umgeben ist. Vor dem Eingang und unter dem Ausgang des Trockners befindet sich je ein Quetschwalzenpaar. In den Schlauch von ca. 350 m Länge werden nun ca. 8 bis 9 l einer wäßrigen Dispersion folgender Zusammensetzung eingefüllt; 7% Polyvinylidenchloridcopolymerisat, das durch Copolymerisation einer Mischung copolymerisierbarer Monomerer hergestellt ist, die 88 Gew.-% Vinylidenchlorid, 3 Gew.-% Acrylsäure, 7,5 Gew.-% Acrylnitril sowie 1,5 Gew.-% Methacrylsäuremethylester, jeweils bezogen auf das Gewicht Monomerenmischung, umfaßt.

Der Schlauch wird in den Trockner so eingeführt, daß ein Teil der Dispersion vor der Einlaufquetschwalze steht; er wird mit Preßluft auf einen Durchmesser von 60 mm aufgeblasen. Vor Eintritt in die absteigende Heizzone wird die heiße Schlauchoberfläche nun mit wäßriger Dispersion folgender Zusammensetzung besprüht:

Die wäßrige Dispersion enthält 5 Gew.-% dispergierten Kunststoffanteil, bezogen auf das Gesamtgewicht der Dispersion, bestehend aus elastischem Copolymerisat aus 98 Gew.-% Acrylsäurebutylester und 2 Gew.-% Acrylsäure. Die Dispersion enthält außerdem 6 Gew.-% Glycerin gelöst, bezogen auf Gesamtgewicht Dispersion, sowie 0,5 Gew.-% Kieselsäure, bezogen auf Gewicht des dispergierten Copolymerisats.

Der mengenmäßig überwiegende Anteil der dispergierten Copolymerisatteilchen hat eine Teilchengröße von ca. 0,05 $\mu$m.

Die Copolymerisatdispersion wird in einer derartigen Menge auf die Außenseite des Trägerschlauchs aufgebracht, daß die trockene durchlässige Schicht eine Dicke aufweist, die einem Gewicht von 2 g Copolymerisat pro $m^2$ Oberfläche der Trägerschlauchaußenseite entspricht. Zur Trocknung wird der Schlauch durch einen Heizkanal hindurchgeführt, in dem eine Temperatur herrscht, die zur Verdampfung des Dispersionsmittels hinreicht — 110°C — und die den Schlauch trocknet.

Nach Verlassen des Trockenkanals wird der Schlauch durch Besprühen mit Wasser auf einen Wassergehalt von ca. 10 Gew.-%, bezogen auf Cellulosehydratträgerschlauch, eingestellt.

Der sehr geschmeidige Schlauch ist durch die in der nachfolgenden Tabelle angegebenen Kennzahlen bezüglich seiner Eigenschaften charakterisiert, wobei die Buchstaben A, B und C der Tabelle folgende Bedeutung haben:

$A_1$ = *Prüfkörper:* Schlauch gemäß Beispiel 1
Wassergehalt: 10 bis 12 Gew.-%
Glyceringehalt: 22 Gew.-%
(sekundäres chemisches Weichmachungsmittel)
jeweils bezogen auf Gesamtgewicht Trägerschlauch

$B_1$ = *Prüfkörper,* hergestellt wie folgt:
Schlauch nach $A_1$ wird im wesentlichen vollständig vom Glyceringehalt durch Heißwasserextraktion befreit, danach getrocknet und mit Wasser befeuchtet. Wassergehalt des befeuchteten Schlauchs: 10 bis 12 Gew.-%, bezogen auf Gesamtgewicht Trägerschlauch.

$C_1$ = *Prüfkörper* Cellulosehydratschlauch mit Filmüberzug auf seiner Innenseite sowie Dimensionierung entsprechend Beispiel 1, keine wasserdurchlässige Schicht auf Basis von elastischem Copolymerisat auf der Außenseite. Wasser- und Glyceringehalt wie Prüfkörper nach $A_1$.

| Eigenschaften | $A_1$ | $B_1$ | $C_1$ |
|---|---|---|---|
| Reißlänge, längs | 3600 m | 3550 m | 3500 m |
| Reißlänge, quer | 3400 m | 3450 m | 3300 m |
| Reißdehnung, längs | 32% | 32% | 28% |
| Reißdehnung, quer | 34% | 32% | 34% |
| Platzdruck, mWS | 11,6 | 11,8 | 11,0 |
| $m^2$-Gewicht | 106 g | 98 g | 102 g |
| Weiterreißfestigkeit, kp/mm], längs | 1,8 | 1,7 | 1,4 |
| (trocken) quer | 1,6 | 1,55 | 1,2 |

Beim Füllen mut Wurstgut sind keine Unterschiede festzustellen; die Würste lassen sich nach Lagerung bei Zimmertemperatur bei 30 bis 40% r.F., ohne zu reißen, anschneiden. Aus der Schnittfläche wird kein Wurstgut herausgedrückt.

Beispiel 2

Ein Schlauch von Kaliber 60 wird innenbeschichtet wie in Beispiel 1 beschrieben. Vor Eintritt in die absteigende Heizzone wird jedoch wäßrige Dispersion folgender Zusammensetzung aufgesprüht:

Die wäßrige Dispersion enthält folgende Bestandteile:

Insgesamt 6 Gew.-%, bezogen auf Gesamtgewicht der Dispersion, eines Copolymerisatgemenges, das zu 4 Gew.-% aus elastischem Copolymerisat gemäß Beispiel 1 und zu 2 Gew.-%, jeweils bezogen auf das Gesamtgewicht des dispergierten Polymeren, aus einem synthetischen thermoplastischen, nicht elastischen Copolymerisat besteht, dessen sich wiederholende Struktureinheiten zu 88% auf Vinylidenchlorid, zu 2% auf Acrylsäure, zu 6% auf Acrylsäuremethylester und zu 4% auf Acrylnitril zurückgehen. Die Dispersion enthält ferner 5 Gew.-% Glycerin, bezogen auf Gesamtgewicht der Dispersion, sowie 0,4 Gew.-% Kieselsäure, bezogen auf Gesamtgewicht des dispergierten Polymerisatanteils.

In der nachfolgenden Tabelle haben die Buchstaben A und C folgende Bedeutung:

$A_2$ = *Prüfkörper:* Schlauch gemäß Beispiel 2
Wassergehalt: 10 bis 12 Gew.-%
Glyceringehalt: 22 Gew.-%
(sekundäres chemisches Weichmachungsmittel)
jeweils bezogen auf Gesamtgewicht Trägerschlauch

$C_2$ = *Prüfkörper:* Cellulosehydratschlauch mit Filmüberzug auf seiner Innenseite sowie Dimensionierung entsprechend Beispiel 2
Wassergehalt: 10 bis 12 Gew.-%
Glyceringehalt 21,5 Gew.-%
jeweils bezogen auf Gesamtgewicht Trägerschlauch, auf seiner Außenseite ist keine Schicht aus synthetischem elastischem Polymerisat vorhanden.

| Eigenschaften | $A_2$ | $C_2$ |
|---|---|---|
| Reißlänge, längs | 3800 m | 3600 m |
| Reißlänge, quer | 3600 m | 3450 |
| Reißdehnung, längs | 32% | 30% |
| Reißdehnung, quer | 34% | 32% |
| Platzdruck, mWS | 11,8 | 10,5 |
| $m^2$-Gewicht | 105 g | 100 g |
| Weiterreißfestigkeit, kp/mm], längs | 1,8 | 1,3 |
| (trocken) quer | 1,65 | 1,25 |

Die wäßrige Polymerisatdispersion wird dabei in einer derartigen Menge auf die Außenseite des Trägerschlauchs aufgebracht, daß die durchlässige Schicht aus elastomerem Polymerisat auf der Schlauchaußenseite eine Dicke aufweist, die einem Flächengewicht von 3,8 g Polymerisat pro $m^2$ Unterlage entspricht. Die Würste in diesen Hüllen reißen unter normalen Bedingungen beim Anschneiden derselben nicht auf.

Beispiel 3

Wie Beispiel 2, jedoch mit dem Unterschied, daß das thermoplastische Vinylidenchloridcopolymerisat ein solches ist, das hergestellt ist durch Copolymerisation eines Gemischs zur Copolymerisation befähigter Monomerer, wobei das Monomerengemisch zu 88 Gew.-% aus Vinylidenchlorid, zu 2 Gew.-% aus Acrylsäure, zu 4 Gew.-% aus Acrylnitril und zu 6 Gew.-% aus Acrylsäuremethylester besteht.

Beispiel 4

Ein Schlauch von Kaliber 60 wird wie in Beispiel 1 beschrieben hergestellt und innenbeschichtet.

Vor dem Eintritt in die absteigende Heizzone wird wäßrige Dispersion folgenden Aufbaus aufgesprüht:

Insgesamt 9 Gew.-% elastisches Copolymerisat, wobei 6 Gew.-% des insgesamt dispergierten Copolymerisats aus einem Copolymerisat bestehen, dessen Molekülketten jeweils zu 97% sich wiederholende Struktureinheiten umfassen, die auf Butylacrylat zurückgehen, und die jeweils 3% sich wiederholende Struktureinheiten aufweisen, die auf Acrylsäure basieren, wobei 3 Gew.-% des insgesamt dispergierten Polymerenanteils aus elastischem Copolymerisat bestehen, dessen Molekülketten zu jeweils 80% aus Struktureinheiten bestehen, die auf Butadien zurückgehen, sowie jeweils 18% sich wiederholende Struktureinheiten, die auf Acrylnitril zurückgehen, und jeweils 2% sich wiederholende Struktureinheiten umfassen, die auf Acrylsäure zurückgehen. Die Teilchengröße des mengenmäßig überwiegenden Anteils dispergierter elastischer Copolymerisatteilchen auf Acrylatbasis beträgt ca. 0,05 $\mu$m.

Die Polymerendispersion enthält ferner 5 Gew.-% Glycerin, bezogen auf Gesamtgewicht Dispersion, sowie 0,4 Gew.-% Kieselsäure, bezogen auf Gesamtgewicht des dispergierten Polymerisats.

Das Cellulosehydrat ist nach dem Entfernen des sekundären Weichmachers so geschmeidig, daß Würste auch bei starkem Ausfüllen und bei r.F. bis 30%, ohne zu reißen, angeschnitten werden können.

Beispiel 5

Ein Cellulosehydratschlauch vom Kaliber 60 mit einer Faserpapiereinlage als Matrix wird wie üblich gesponnen, regeneriert, gewaschen und durch Einwirkung von wäßriger Lösung, die sekundäres Weichmachungsmittel in Gestalt von Glycerin enthält, weichgemacht und auf seiner Innen- und Außenseite mit Melamin-Formaldehyd-Vorkondensat als chemisches Verankerungsmittel präpariert. Die Beschichtung wird in einem Trockner vorgenommen, der aus einem auf- und einem absteigenden Teil besteht und oben eine Umlenkwalze besitzt. Oberhalb des absteigenden Trocknerteils ist eine ringförmige Sprühdüse angebracht, die von einem Acrylglasgehäuse umgeben ist. Vor dem Eingang und unter dem Ausgang des Trockners befindet sich je ein Quetschwalzenpaar.

In den Schlauch von ca. 350 m Länge werden nun ca. 8 bis 9 l einer wäßrigen Dispersion folgender Zusammensetzung eingefüllt: 7% Polyvinylidenchloridcopolymerisat, das durch Copolymerisation einer Mischung copolymerisierbarer Monomerer hergestellt ist, die 88 Gew.-% Vinylidenchlorid, 3 Gew.-% Acrylsäure, 7,5 Gew.-% Acrylnitril sowie 1,5 Gew.-% Methacrylsäuremethyl ester, jeweils bezogen auf das Gewicht Monomerenmischung, umfaßt.

Der Schlauch wird in den Trockner so eingeführt, daß ein Teil der Dispersion vor der Einlaufquetschwalze steht; er wird mit Preßluft auf einen Durchmesser von 60 mm aufgeblasen. Vor Eintritt in die absteigende Heizzone wird die heiße Schlauchoberfläche nun mit wäßriger Dispersion folgender Zusammensetzung besprüht:

Die wäßrige Dispersion enthält 5 Gew.-% dispergiertes elastisches Copolymerisat, das zu 75 Gew.-% aus copolymerisiertem Acrylsäurebutylester, zu 5 Gew.-% aus copolymerisiertem Methacrylsäurebutylester, zu 16 Gew.-% aus copolymerisiertem Acrylsäureäthylester, zu 2 Gew.-% aus copolymerisiertem Methacrylsäureäthylester und zu 2 Gew.-% aus copolymerisierter Acrylsäure besteht.

Der mengenmäßig überwiegende Anteil der Copolymerisatteilchen weist eine Teilchengröße von 0,05 $\mu$m und kleiner auf.

Die Copolymerisatdispersion wird in einer derartigen Menge auf die Außenseite des Trägerschlauchs aufgebracht, die 4,5 g Copolymerisat pro m$^2$ Trägerschlauchaußenseite entspricht. Der Schlauch wird dann durch einen Heizkanal hindurchgeführt, in dem eine Temperatur herrscht, die zur Verdampfung des Dispersionsmittels hinreicht — 110°C — und die den Schlauch trocknet.

Nach Verlassen des Trockenkanals wird der Schlauch durch Besprühen mit Wasser auf einen Wassergehalt von ca. 10 Gew.-%, bezogen auf Cellulosehydratträgerschlauch, eingestellt.

Die durchlässige Schicht weist eine Dicke auf, die einem Gewicht von 2 g Copolymerisat pro m$^2$ Oberfläche der Trägerschlauchaußenseite entspricht.

Bei Verwendung von Schlauchhüllen gemäß Beispiel 5 zur Herstellung von Wurst ist die Wursthülle auch dann noch und bei einer relativen Luftfeuchtigkeit bis 30% so geschmeidig, daß sie angeschnitten werden kann, ohne zu reißen, wenn die Wursthülle im Verlauf ihrer bestimmungsgemäßen Verwendung durch Kochen in heißem Wasser kein sekundäres chemisches Weichmachungsmittel mehr aufweist.

Beispiel 6

Die Herstellung des Schlauchs erfolgt gemäß den Angaben in Beispiel 5, jedoch mit der Abwandlung, daß die verwendete wäßrige Copolymerisatdispersion 10 Gew.-%, bezogen auf das Gesamtgewicht der Dispersion, dispergiertes elastisches Copolymerisat enthält, das zu 70 Gew.-% aus copolymerisiertem Acrylsäurebutylester, zu 28 Gew.-% aus copolymerisiertem Acrylsäureäthylester und zu 2 Gew.-% aus copolymerisierter Acrylsäure, jeweils bezogen auf das Gesamtgewicht des Copolymerisats, besteht, und die dispergierten Copolymerisatteilchen eine Teilchengröße von 0,05 $\mu$m und kleiner aufweisen.

Beispiel 7

Die Herstellung des Schlauchs erfolgt gemäß den Angaben in Beispiel 5, jedoch mit der Abwandlung, daß die verwendete wäßrige Copolymerisatdispersion 5 Gew.-%, bezogen auf das Gesamtgewicht der Dispersion, elastisches Copolymerisat enthält, wie es in Anspruch 11 genannt wird, und die dispergierten Copolymerisatteilchen eine Teilchengröße von 0,05 $\mu$m und kleiner aufweisen.

Beispiel 8

Die Herstellung des Schlauchs wird in der in Beispiel 5 angegebenen Verfahrensweise durchgeführt, jedoch mit der Abwandlung, daß die verwendete wäßrige Copolymerisatdispersion 10 Gew.-%, bezogen auf das Gesamtgewicht der Dispersion, eines Copolymerisatgemenges enthält, das zu 80 Gew.-%, bezogen auf das Gesamtgewicht des Gemenges, aus Copolymerisat aus 70 Gew.-% copolymerisiertem Acrylsäurebutylester, 28 Gew.-% copolymerisiertem Acrylsäureäthylester und 2 Gew.-% copolymerisierter Acrylsäure, jeweils bezogen auf das Gesamtgewicht des Copolymerisats, und zu 20 Gew.-% bezogen auf das Gesamtgewicht des Gemenges, aus Copolymerisat aus 90 Gew.-% copolymerisiertem Butadien, 8 Gew.-% copolymerisiertem Acrylnitril und 2 Gew.-% copolymerisierter Acrylsäure, jeweils bezogen auf das Gesamtgewicht des Copolymerisats, besteht.

Die Copolymerisatteilchen beider im Gemenge vorliegenden Copolymerisate weisen jeweils eine Teilchengröße von kleiner als 0,08 $\mu$m auf.

Beispiel 9

Die Herstellung des Schlauchs wird in der in Beispiel 5 angegebenen Verfahrensweise durchgeführt, jedoch mit der Abwandlung, daß die verwendete wäßrige Copolymerisatdispersion 5 Gew.-%, bezogen auf das Gesamtgewicht der Dispersion, eines Copolymerisatgemenges enthält, das zu 80 Gew.-%, bezogen auf das Gesamtgewicht des Gemenges, aus Copolymerisat aus 70 Gew.-% copolymerisiertem Acrylsäurebutylester, 28 Gew.-% copolymerisiertem Acrylsäureäthylester und 2 Gew.-% copolymerisierter Acrylsäure, jeweils bezogen auf das Gesamtgewicht des Copolymerisats, und zu 20 Gew.-%, bezogen auf das Gesamtgewicht des Gemenges, aus Copolymerisat aus 88 Gew.-% copolymerisiertem Isopren, 10 Gew.-% copolymerisiertem Acrylnitril und 2 Gew.-% copolymerisierter Acrylsäure, jeweils bezogen auf das Gesamtgewicht des Copolymerisats, besteht.

Die in der Dispersion insgesamt enthaltenen Copolymerisatteilchen weisen zum mengenmäßig überwiegenden Anteil eine Teilchengröße kleiner als 0,08 $\mu$m auf.

**Patentansprüche**

1. Schlauchförmige bevorzugt faserverstärkte Verpackungshülle (1), insbesondere zur Verwendung als künstliche Wursthülle geeignet, auf Basis von gegebenenfalls chemische Weichmachungsmittel enthaltendem Cellulosehydrat mit wasser- und wasserdampfundurchlässigem Filmüberzug (2) aus synthetischem thermoplastischem Polymerisat auf der Innenseite, dadurch gekennzeichnet, daß die Verpackungshülle (1) auf ihrer Außenseite eine wasserdurchlässige Schicht (3) auf Basis von synthetischem elastischem Copolymerisat aufweist.

2. Schlauchförmige Verpackungshülle nach Anspruch 1, dadurch gekennzeichnet, daß das Copolymerisat der wasserdurchlässigen Schicht zum mengenmäßig überwiegenden Anteil aus Acrylsäureester, Methacrylsäureester oder Mischungen derselben und zum mengenmäßig geringeren Anteil, jeweils bezogen auf die Gesamtmenge des Copolymerisats, aus Acrylsäure, Methacrylsäure oder Mischungen derselben aufgebaut ist.

3. Schlauchförmige Verpackungshülle nach Anspruch 2, dadurch gekennzeichnet, daß das Copolymerisat der wasserdurchlässigen Schicht zum mengenmäßig überwiegenden Anteil aus Acrylsäurebutylester, Methacrylsäurebutylester oder Mischungen beider und zum mengenmäßig geringeren Anteil, jeweils bezogen auf die Gesamtmenge des Copolymerisats, aus Acrylsäure, Methacrylsäure oder Mischungen beider aufgebaut ist.

4. Schlauchförmige Verpackungshülle nach Anspruch 3, dadurch gekennzeichnet, daß das Copolymerisat der wasserdurchlässigen Schicht zu insgesamt 91 bis 98 Gew.-% aus Acrylsäurebutylester, Methacrylsäurebutylester oder Mischungen beider und zu insgesamt 9 bis 2 Gew.-% aus Acrylsäure, Methacrylsäure oder Mischungen beider, jeweils bezogen auf das Gesamtgewicht des Copolymerisats, aufgebaut ist.

5. Schlauchförmige Verpackungshülle nach Anspruch 4, dadurch gekennzeichnet, daß das die wasserdurchlässige Schicht bildende Copolymerisat zu 98 Gew.-% aus Acrylsäurebutylester und zu 2 Gew.-% aus Acrylsäure, jeweils bezogen auf das Gesamtgewicht des Copolymerisats, besteht.

6. Schlauchförmige Verpackungshülle nach Anspruch 1, dadurch gekennzeichnet, daß das Copolymerisat der wasserdurchlässigen Schicht aus aliphatischen Dienen, ausgewählt aus einer Gruppe umfassend Butadien, Isopren sowie Chloropren oder Mischungen derselben, und gegebenenfalls zum mengenmäßig geringeren Anteil, bezogen auf die Gesamtmenge des Copolymerisats, aus Acrylsäureester, Methacrylsäureester, Acrylsäure, Methacrylsäure, Acrylnitril oder Styrol oder Mischungen derselben aufgebaut ist.

7. Schlauchförmige Verpackungshülle nach Anspruch 1, dadurch gekennzeichnet, daß die

wasserdurchlässige Schicht aus einem Gemenge chemisch unterschiedlicher elastomerer Copolymerisate nach einem der Ansprüche 2 bis 5 aufgebaut ist.

8. Schlauchförmige Verpackungshülle nach Anspruch 7, dadurch gekennzeichnet, daß das Gemenge auch elastisches Copolymerisat gemäß Anspruch 6 umfaßt.

9. Schlauchförmige Verpackungshülle nach Anspruch 8, dadurch gekennzeichnet, daß die wasserdurchlässige Schicht aus einem Copolymerisatgemenge besteht, dessen erste mengenmäßig überwiegende Komponente ein Copolymerisat ist, das zu 97 Gew.-% aus Methacrylsäurebutylester oder bevorzugt Acrylsäurebutylester, und zu insgesamt 3 Gew.-% aus Methacrylsäure oder bevorzugt Acrylsäure, jeweils bezogen auf das Gesamtgewicht der 1. Komponente, aufgebaut ist, und das zum mengenmäßig geringeren Anteil, bezogen auf das Gesamtgewicht des Copolymerisatgemenges, aus einer zweiten Komponente aus Copolymerisat besteht, das zum mengenmäßig überwiegenden Anteil aus Butadien und zum mengenmäßig geringeren Anteil, jeweils bezogen auf das Gesamtgewicht der 2. Komponente, aus Acrylnitril, Styrol oder Mischungen beider aufgebaut ist.

10. Schlauchförmige Verpackungshülle nach Anspruch 2, dadurch gekennzeichnet, daß die wasserdurchlässige Schicht aus elastischem Copolymerisat zu insgesamt 70 bis 80 Gew.-% aus copolymerisiertem Acrylsäurebutylester, Methacrylsäurebutylester oder Mischungen derselben, zu insgesamt 29 bis 15 Gew.-% aus copolymerisiertem Acrylsäureäthylester, Methacrylsäureäthylester oder Mischungen derselben und zu insgesamt 1 bis 5 Gew.-% aus copolymerisierter Acrylsäure, Methacrylsäure oder Mischungen beider, jeweils bezogen auf das Gesamtgewicht des Copolymerisats, besteht.

11. Schlauchförmige Verpackungshülle nach Anspruch 10, dadurch gekennzeichnet, daß das Copolymerisat aus 80 Gew.-% copolymerisiertem Acrylsäurebutylester, 15 Gew.-% copolymerisiertem Acrylsäureäthylester und zu 5 Gew.-% aus copolymerisierter Acrylsäure, jeweils bezogen auf das Gesamtgewicht des Copolymerisats besteht.

12. Schlauchförmige Verpackungshülle nach Anspruch 1, dadurch gekennzeichnet, daß die wasserdurchlässige Schicht aus einem Copolymerisatgemenge besteht, dessen erste mengenmäßig überwiegende Komponete aus einem elastischen Copolymerisat einer der Ansprüche 1 bis 11 und dessen zweite Komponente aus elastischem Copolymerisat aus copolymerisierten aliphatischen Dienen, ausgewählt aus der Gruppe umfassend Butadien, Isopren, sowie copolymerisiertem Acrylsäureester, insbesondere Acrylsäurebutylester, Methacrylsäureester, insbesondere Methacrylsäurebutylester, Acrylsäure, Methacrylnitril oder Styrol besteht.

13. Schlauchförmige Verpackungshülle nach Anspruch 8, dadurch gekennzeichnet, daß das Gemenge elastomerer Copolymerisate zu wenigstens 80 Gew.-%, bezogen auf das Gesamtgewicht des Gemenges, aus einem Copolymerisat nach Anspruch 10, und bis zu 20 Gew.-%, bezogen auf das Gesamtgewicht des Gemenges, aus Copolymerisat, bestehend zu insgesamt 1 bis 2 Gew.-% aus copolymerisierter Acrylsäure, Methacrylsäure oder Mischungen beider, zu höchstens 15 Gew.-% aus copolymerisiertem Acrylnitril und zu wenigstens insgesamt 83 Gew.-% aus copolymerisiertem Monomeren der allgemeinen Formel

$$CH_2 = HC - \overset{\displaystyle R}{\overset{|}{C}} = CH_2$$

in der R Wasserstoff, Chlor, oder eine $CH_3$-Gruppe ist, oder einem Gemisch der Monomeren, jeweils bezogen auf das Gesamtgewicht des Copolymerisatgemenges, aufgebaut ist.

14. Schlauchförmige Verpackungshülle nach Anspruch 13, dadurch gekennzeichnet, daß das zweite Copolymerisat des Gemenges 90 Gew.-% copolymerisiertes Butadien, 8 Gew.-% copolymerisiertes Acrylnitril und 2 Gew.-% copolymerisierte Acrylsäure umfaßt.

15. Schlauchförmige Verpackungshülle nach Anspruch 13, dadurch gekennzeichnet, daß das zweite elastische Copolymerisat des Copolymerisatgemenges 88 Gew.-% copolymerisiertes Isopren, 10 Gew.-% copolymerisiertes Acrylnitril und 2 Gew.-% copolymerisierte Acrylsäure enthält.

16. Schlauchförmige Verpackungshülle nach Anspruch 14 oder 15, dadurch gekennzeichnet, daß das erste Copolymerisat das Copolymerisat des Anspruchs 11 ist.

17. Schlauchförmige Verpackungshülle nach einem der Ansprüche 1 bis 16, dadurch gekennzeichnet, daß die wasserdurchlässige Schicht auf Basis von elastischem Copolymerisat auf der Außenseite der Hülle ein Flächengewicht im Bereich von 0,5 bis 8 g Copolymerisat pro $m^2$ Oberfläche der Verpackungshülle aufweist.

18. Schlauchförmige Verpackungshülle nach Anspruch 17, dadurch gekennzeichnet, daß die wasserdurchlässige Schicht auf Basis von elastischem Copolymerisat einen räumlichstrukturellen Aufbau aufweist, der sich ergibt, wenn man bei der Herstellung der Schlauchhülle zur Ausbildung der Schicht eine wäßrige Copolymerisatdispersion verwendet, bei der die dispergierten Copolymerisatteilchen eine Größe von höchstens 0,08 $\mu$m, bevorzugt 0,05 $\mu$m und kleiner, besitzen, und man nach Aufbringen der wäßrigen Dispersion auf die Schlauchhüllenaußenseite die Schaluchhülle trocknet.

19. Schlauchförmige Verpackungshülle nach Anspruch 1, dadurch gekennzeichnet, daß die wasserdurchlässige Schicht aus einem Copolymerisatgemenge besteht, das im mengenmäßigen Überschuß ein Gemenge elastischer Copolymerisate der Ansprüche 1 bis 16 enthält und zum mengenmäßig

geringeren Anteil, jeweils bezogen auf das Gesamtgewicht des Gemenges, ein Vinylidenchloridcopolymerisat mit überwiegendem Anteil an copolymerisiertem Vinylidenchlorid enthält.

20. Schlauchförmige Verpackungshülle nach Anspruch 19, dadurch gekennzeichnet, daß das Vinylidenchloridcopolymerisat zu 88 Gew.-% aus copolymerisiertem Vinylidenchlorid, zu 3 Gew.-% aus copolymerisierter Acrylsäure, zu 7,5 Gew.-% aus copolymerisiertem Acrylnitril und zu 1,5 Gew.-% aus copolymerisiertem Methacrylsäurebutylester, jeweils bezogen auf das Gesamtgewicht des Copolymerisats, besteht.

21. Verfahren zur Herstellung schlauchförmiger Verpackungshüllen nach einem der Ansprüche 1 bis 20, bei dem man von einem bevorzugt faserverstärkten, sowohl Wasser als auch sekundäres chemisches Weichmachungsmittel enthaltenden Schlauch auf basis von Cellulosehydrat ausgeht, gegebenenfalls auf seiner Innenseite ein haftvermittelndes chemisches Mittel aufbringt und auf der Schlauchinnenseite einen wasserdampf- sowie wasserundurchlässigen Filmüberzug aus synthetischem thermoplastischem Polymerisat anordnet, dadurch gekennzeichnet, daß man auf die Schlauchaußenseite wäßrige, elastisches Copolymerisat enthaltende Dispersion, deren mengenmäßig überwiegender Anteil dispergierter Copolymerisatteilchen eine Größe von höchstens 0,08 $\mu$m, bevorzugt eine Größe von 0,05 $\mu$m und kleiner, aufweist, in einer derartigen Menge zur Einwirkung bringt, daß sich auf der Schlauchhüllenaußenseite eine Schicht ausbildet, die ein Flächengewicht im Bereich von 0,5 bis 8 g Copolymerisat pro $m^2$ Trägeroberfläche aufweist, das Dispersionsmittel vertreibt und danach gegebenenfalls den Schlauch mit Wasser befeuchtet.

22. Verfahren nach Anspruch 21, dadurch gekennzeichnet, daß die verwendete wäßrige Copolymerisatdispersion im Bereich von 5 bis 10 Gew.-% Copolymerisat, bezogen auf das Gesamtgewicht der Dispersion, enthält.

23. Verfahren nach Anspruch 21 oder 22, dadurch gekennzeichnet, daß das Dispersionsmittel der wäßrigen Dispersion sekundäres chemisches Weichmachungsmittel, insbesondere Glycerin, Glykol oder Polyglykol, enthält.

## Claims

1. A tubular, preferably fibre-reinforced casing (1), which in particular may be used as an artificial sausage packaging skin and is based on cellulose hydrate optionally containing chemical plasticizers, and which has on the inside of the tubing skin a film coating (2) which is impermeable to water and water vapor and consists of a synthetic thermoplastic polymer, characterised in that on the outside of said casing (1), there is a water-permeable layer (3) based on a synthetic elastic copolymer.

2. A tubular casing as claimed in claim 1, characterized in that the permeable layer consists of a copolymer which, to the extent of the quantitatively predominant part, is built up from acrylates, methacrylates or mixtures thereof and, to the extent of the quantitatively smaller part, each relative to the total amount of copolymer, from acrylic acid, methacrylic acid or mixtures thereof.

3. A tubular casing as claimed in claim 2, characterized in that the water-permeable layer consists of a copolymer which, to the extent of the quantitatively predominant part, is built up from butyl acrylate, butyl methacrylate or mixtures of the two and, to the extent of the quantitatively smaller part, each relative to the total amount of copolymer, from acrylic acid, methacrylic acid or mixtures of the two.

4. A tubular casing as claimed in claim 3, characterized in that the water-permeable layer consists of a copolymer which is built up, to the extent of 91 to 98% by weight in total, from butyl acrylate, butyl methacrylate or mixtures of the two and, to the extent of 9 to 2% by weight in total, from acrylic acid, methacrylic acid or mixtures of the two, each relative to the total weight of the copolymer.

5. A tubular casing as claimed in claim 4, characterized in that the copolymer forming the water-permeable layer consists to the extent of 98% by weight of butyl acrylate and to the extent of 2% by weight of acrylic acid, each relative to the total weight of the copolymer.

6. A tubular casing as claimed in claim 1, characterized in that the water-permeable layer consists of a copolymer which is built up from aliphatic dienes, selected from a group comprising butadiene, isoprene and chloroprene or mixtures thereof, and, if desired and to the extent of a quantitatively smaller part, relative to the total amount of copolymer, from acrylates, methacrylates, acrylic acid, methacrylic acid, acrylonitrile or styrene or mixtures thereof.

7. A tubular casing as claimed in claim 1, characterized in that the water-permeable layer is built up from a blend of chemically different elastomeric copolymers as claimed in any of claims 2 to 5.

8. A tubular casing as claimed in claim 7, characterized in that the blend additionally comprises elastic copolymers as claimed in claim 6.

9. A tubular casing as claimed in claim 8, characterized in that the water-permeable layer consists of a copolymer blend, of which the first, quantitatively predominant component is a copolymer which is built up to the extent of 97% by weight from butyl methacrylate or, preferably, butyl acrylate and to the extent of 3% by weight in total from methacrylic acid or, preferably, acrylic acid, each relative to the total weight of the first component, and in that it consists, to the extent of the quantitatively smaller part, relative to the total weight of the copolymer blend, of a second component obtained from a

copolymer which, to the extent of the quantitatively predominant part, is built up from butadiene, and, to the extent of the quantitatively smaller part, each relative to the total weight of the second component, from acrylonitrile, styrene or mixtures of the two.

10. A tubular casing as claimed in claim 2, characterized in that the water-permeable layer obtained from an elastic copolymer consists to the extent of 70 to 80% by weight in total of copolymerized butyl acrylate, butyl methacrylate or mixtures thereof, to the extent of 29 to 15% by weight in total of copolymerized ethyl acrylate, ethyl methacrylate or mixtures thereof and to the extent of 1 to 5% by weight in total of copolymerized acrylic acid, methacrylic acid or mixtures of the two, each relative to the total weight of the copolymer.

11. A tubular casing as claimed in claim 10, characterized in that the copolymer consists to the extent of 80% by weight of copolymerized butyl acrylate, to the extent of 15% by weight of copolymerized ethyl acrylate and to the extent of 5% by weight of copolymerized acrylic acid, each relative to the total weight of the copolymer.

12. A tubular casing as claimed in claim 1, characterized in that the water-permeable layer consists of a copolymer blend, of which the first, quantitatively predominant, component is an elastic copolymer as claimed in any of claims 1 to 11, and of which the second component is an elastic copolymer built up from copolymerized aliphatic dienes, selected from a group comprising butadiene, isoprene and from copolymerized acrylate, particularly butyl acrylate, methacrylate, particularly butyl methacrylate, acrylic acid, methacrylonitrile or styrene.

13. A tubular casing as claimed in claim 8, characterized in that the blend of elastomeric copolymers is built up to the extent of at least 80% by weight, relative to the total weight of the blend, from a copolymer as claimed in claim 10, and, to the extent of up to 20% by weight, relative to the total weight of the blend, from a copolymer consisting to the extent of 1 to 2% by weight in total of copolymerized acrylic acid, methacrylic acid or mixtures of the two, to the extent of at most 15% by weight of copolymerized acrylonitrile, and to the extent of at least 83% by weight in total of copolymerized monomers of the general formula

$$CH_2=HC-\overset{\overset{\displaystyle R}{|}}{C}=CH_2$$

in which R is hydrogen, chlorine or a $CH_3$ group or a mixture of the monomers, each relative to the total weight of the copolymer blend.

14. A tubular casing as claimed in claim 13, characterized in that the second copolymer of the blend comprises 90% by weight of copolymerized butadiene, 8% by weight of copolymerized acrylonitrile and 2% by weight of copolymerized acrylic acid.

15. A tubular casing as claimed in claim 13, characterized in that the second elastic copolymer of the copolymer blend contains 88% by weight of copolymerized isoprene, 10% by weight of copolymerized acrylonitrile and 2% by weight of copolymerized acrylic acid.

16. A tubular casing as claimed in claim 14 or 15, characterized in that the first copolymer is the copolymer as claimed in claim 11.

17. A tubular casing as claimed in any of claims 1 to 16, characterized in that the water-permeable layer based on an elastic copolymer is provided in such an amount on the outside of the tubular casing that the total amount of copolymer is in the range from 0,5 to 8 $g/m^2$ of casing surface.

18. A tubular casing as claimed in claim 17, characterized in that the three-dimensional structural build-up of the water-permeable layer based on an elastic copolymer is obtained by applying to the outside of the tubular casing an aqueous copolymer dispersion in which the dispersed copolymer particles have a size of at most 0.08 $\mu$m, preferably 0.05 $\mu$m and smaller, and by subsequently drying the outside of the tubular casing.

19. A tubular casing as claimed in claim 1, characterized in that the water-permeable layer consists of a copolymer blend which, to the extent of the quantitatively predominant part, is built up from a blend of elastic copolymers as claimed in claims 1 to 16, and, to the extent of the quantitatively smaller part, from a vinylidene chloride copolymer containing a predominant part of copolymerized vinylidene chloride.

20. A tubular casing as claimed in claim 19, characterized in that the vinylidene chloride copolymer consists of 88% by weight of copolymerized vinylidene chloride, of 3% by weight of copolymerized acrylic acid, of 7.5% by weight of copolymerized acrylonitrile and of 1.5% by weight of copolymerized butyl methacrylate, each relative to the total weight of the copolymer.

21. A process for the manufacture of tubular casings as claimed in any of claims 1 to 20, in which the starting material is a tubular casing, preferably a fibre-reinforced casing, which is based on cellulose hydrate and which contains both water and a secondary chemical plasticizer, an adhesion promoting chemical agent is applied to the inside thereof, if desired, and a film coating, which is impermeable to water and to water vapor and consists of a synthetic thermoplastic polymer, is provided on the inside of the tubular casing, characterized in that the outside of the tube is treated with an aqueous dispersion which contains an elastic copolymer and of which the quantitatively predominant part of dispersed

copolymer particles has a size of at most 0.08 $\mu$m, preferably 0.05 $\mu$m and smaller, in such an amount that, on the outside of the tubular casing, a layer is formed, the thickness of which corresponds to a weight per unit area in the range from 0.5 to 8 g of copolymer per $m^2$ of carrier surface, and in that the dispersing medium is driven off and subsequently, if desired, the tube is moistened with water.

22. A process as claimed in claim 21, characterized in that the aqueous copolymer dispersion used contains a total in the range from 5 to 10% by weight of copolymer, relative to the total weight of the dispersion.

23. A process as claimed in claim 21 or 22, characterized in that the dispersing medium of the aqueous dispersion contains a secondary chemical plasticizer, in particular glycerol, glycol or polyglycol.

**Revendications**

1. Enveloppe tubulaire (1) pour emballages, de préférence renforcée par des fibres, en particulier appropriée à l'emploi comme boyau de saucisse artificiel, à base d'hydrate de cellulose contenant éventuellement du plastifiant chimique, pourvue sur sa face intérieure d'une pellicule de revêtement (2) imperméable à l'eau et à la vapeur d'eau, réalisée en un produit de polymérisation synthétique thermoplastique, caractérisé en ce que l'enveloppe pour emballage (1) présente sur sa face extérieure une couche (3) perméable à l'eau à base d'un produit de copolymérisation synthétique élastique.

2. Enveloppe tubulaire pour emballages selon la revendication 1, caractérisée en ce que le produit de copolymérisation de la couche perméable à l'eau est formé pour sa fraction pondérale majoritaire d'un ester de l'acide acrylique, ou d'un ester de l'acide méthacrylique, ou de leurs mélanges, et pour sa fraction pondérale minoritaire, par rapport chaque fois à la quantité totale de produit de copolymérisation, d'acide acrylique, d'acide méthacrylique ou de leurs mélanges.

3. Enveloppe tubulaire pour emballages selon la revendication 2, caractérisée en ce que le produit de copolymérisation de la couche perméable à l'eau est formé pour sa fraction pondérale majoritaire d'ester butylique de l'acide acrylique, d'ester butylique de l'acide méthacrylique ou de leurs mélanges, et pour sa fraction pondérale minoritaire, chaque fois par rapport à la quantité totale du produit de copolymérisation, d'acide acrylique, d'acide méthacrylique ou de leurs mélanges.

4. Enveloppe tubulaire pour emballages selon la revendication 3, caractérisée en ce que le produit de copolymérisation de la couche perméable à l'eau est formé pour une fraction comprise entre 91 et 98% en poids d'ester butylique de l'acide acrylique ou d'ester butylique de l'acide méthacrylique ou de leurs mélanges, et pour une fraction comprise entre 9 et 2% en poids d'acide acrylique, d'acide méthacrylique ou de leurs mélanges, les pourcentages se rapportant au poids total du produit de copolymérisation.

5. Enveloppe tubulaire pour emballages selon la revendication 4, caractérisée en ce que le produit de copolymérisation de la couche perméable à l'eau est formée pour 98% en poids d'ester butylique de l'acide acrylique et pour 2% en poids d'acide acrylique, les pourcentages se rapportant au poids total du produit de copolymérisation.

6. Enveloppe tubulaire pour emballages selon la revendication 1, caractérisée en ce que le produit de copolymérisation de la couche perméable à l'eau est formé de diènes aliphatiques choisis parmi le butadiène, l'isoprène et le chloroprène et leurs mélanges, et éventuellement pour une fraction pondérale minoritaire par rapport au poids total du produit de copolymérisation, d'esters acryliques, d'esters méthacryliques, d'acide acrylique, d'acide méthacrylique, d'acrylonitrile, ou de styrène, ou de leurs mélanges.

7. Enveloppe tubulaire pour emballages selon la revendication 1 caractérisée en ce que la couche perméable à l'eau est formée d'un mélange de produits de copolymérisation élastomères chimiquement différents définis dans l'une des revendications 2 à 5.

8. Enveloppe tubulaire pour emballages selon la revendication 7, caractérisée en ce que le mélange comprend le produit de copolymérisation élastique selon la revendication 6.

9. Enveloppe tubulaire pour emballages selon la revendication 8, caractérisée en ce que la couche perméable à l'eau est constituée par un mélange de produits de copolymérisation dont le premier composant pondéralement majoritaire est un produit de copolymérisation formé pour 97% en poids d'ester butylique de l'acide méthacrylique ou de préférence d'ester butylique de l'acide acrylique, et pour au total 3% en poids d'acide méthacrylique ou de préférence d'acide acrylique, les pourcentages se rapportant au poids total du premier composant, et dont le second composant, pondéralement minoritaire par rapport au poids total du mélange de produits de copolymérisation, est un produit de copolymérisation dont la fraction pondérale majoritaire est formée de butadiène et la fraction pondérale minoritaire d'acrylonitrile, de styrène ou de leurs mélanges, les fractions pondérales se rapportant au poids total du second composant.

10. Enveloppe tubulaire pour emballages selon la revendication 2, caractérisée en ce que la couche perméable à l'eau en produit de copolymérisation élastique est formée d'au total 70 à 80% en poids d'ester butylique de l'acide acrylique copolymérisé, d'ester butylique de l'acide méthacrylique copolymérisé, ou de leurs mélanges, d'au total 29 à 15% en poids d'ester éthylique de l'acide acrylique copolymérisé, d'ester éthylique de l'acide méthacrylique copolymérisé ou de leurs mélanges et d'au

total 1 à 5% en poids d'acide acrylique copolymérisé, d'acide méthacrylique copolymérisé ou de leurs mélanges, les pourcentages se rapportant au poids total du produit de copolymérisation.

11. Enveloppe tubulaire pour emballages selon la revendication 10, caractérisée en ce que le produit de copolymérisation comprend 80% en poids d'ester butylique de l'acide acrylique copolymérisé, 15% en poids d'ester éthylique de l'acide acrylique copolymérisé et 5% en poids d'acide acrylique copolymérisé, les pourcentages se rapportant au poids total du produit de copolymérisation.

12. Enveloppe tubulaire pour emballages selon la revendication 1, caractérisée en ce que la couche perméable à l'eau est un mélange de produits de copolymérisation dont le premier composant, pondéralement majoritaire, est un produit de copolymérisation élastique selon l'une des revendications 1 à 11, et dont le second composant est un produit de copolymérisation élastique, formé de copolymères de diènes aliphatiques, choisis parmi le butadiène et l'isoprène, et de copolymères d'esters acryliques, en particulier de l'ester butylique de l'acide acrylique, d'esters méthacryliques, en particulier de l'ester butylique de l'acide méthacrylique, de l'acide acrylique, du méthacrylonitrile ou du styrène.

13. Enveloppe tubulaire pour emballages selon la revendication 8, caractérisée en ce que le mélange de produits de copolymérisation élastomères est formé pour au moins 80% en poids par rapport au poids total du mélange d'un produit de copolymérisation selon la revendication 10, et pour jusqu'à 20% en poids par rapport au poids total du mélange, d'un produit de copolymérisation constitué pour au total 1 à 2% en poids par de l'acide acrylique copolymérisé, d'acide méthacrylique copolymérisé, ou de leurs mélanges, pour au maximum 15% en poids par de l'acrylonitrile copolymérisé, et pour au moins au total 83% en poids par des monomères copolymérisés de formule générale

$$CH_2=HC-\overset{R}{\overset{|}{C}}=CH_2$$

dans laquelle R est un atome d'hydrogène, ou un atome de chlore ou un groupe $CH_3$,
ou bien par un mélange de monomères, les pourcentages se rapportant au poids total du mélange de produits de copolymérisation.

14. Enveloppe tubulaire pour emballages selon la revendication 13, caractérisée en ce que le second produit de copolymérisation du mélange comprend 90% en poids de butadiène copolymérisé, 8% en poids d'acrylonitrile copolymérisé, et 2% en poids d'acide acrylique copolymérisé.

15. Enveloppe tubulaire pour emballages selon la revendication 13, caractérisée en ce que le second produit de copolymérisation élastique du mélange contient 88% en poids d'isoprène copolymérisé, 10% en poids d'acrylonitrile, et 2% en poids d'acide acrylique copolymérisé.

16. Enveloppe tubulaire pour emballages selon la revendication 14 ou 15, caractérisée en ce que le premier produit de copolymérisation est celui défini dans la revendication 11.

17. Enveloppe tubulaire pour emballages selon l'une des revendications 1 à 16, caractérisée en ce que la couche perméable à l'eau à base de produit de copolymérisation élastique sur la face extérieure de l'enveloppe présente un poids par surface compris entre 0,5 et 8 g de produit de copolymérisation par $m^2$ de la surface de l'enveloppe d'emballage.

18. Enveloppe tubulaire pour emballages selon la revendication 17, caractérisée en ce que la couche perméable à l'eau à base de produit de copolymérisation élastique présente une structure dans l'espace que l'on obtient en utilisant pendant la fabrication de l'enveloppe tubulaire, pour former la couche une dispersion aqueuse d'un produit de copolymérisation, dans laquelle la taille des particules dispersées n'est pas supérieure à 0,08 $\mu$m, et de préférence égale ou inférieure à 0,05 $\mu$m et en séchant l'enveloppe tubulaire après avoir appliqué la dispersion aqueuse sur la face extérieure.

19. Enveloppe tubulaire pour emballages selon la revendication 1, caractérisée en ce que la couche perméable à l'eau est formée d'un mélange de produits de copolymérisation contenant un excès, au point de vue pondéral, du mélange de produits de copolymérisation élastiques des revendications 1 à 16, le reste, les fractions pondérales se rapportant au poids total du mélange, étant un produit de copolymérisation de chlorure de vinylidène composé pour sa plus grande partie de chlorure de vinylidène copolymérisé.

20. Enveloppe tubulaire pour emballages selon la revendication 19, caractérisée en ce que le produit de copolymérisation du chlorure de vinylidène est composé de 88% en poids de chlorure de vinylidène copolymérisé, de 3% en poids d'acide acrylique copolymérisé, de 7,5% en poids d'acrylonitrile copolymérisé, et de 1,5% en poids d'ester butylique de l'acide méthacrylique, les pourcentages se rapportant au poids total de produit de copolymérisation.

21. Procédé pour la fabrication des enveloppes tubulaires pour emballages selon l'une des revendications 1 à 20, dans lequel la matière première est un tube à base d'hydrate de cellulose contenant de l'eau et aussi un plastifiant chimique secondaire, de préférence renforcé par des fibres, pourvu éventuellement sur sa face intérieure d'un agent chimique donnant de l'adhérence et sur sa surface intérieure d'une pellicule de revêtement imperméable à l'eau et à la vapeur d'eau en un produit de polymérisation synthétique thermoplastique, caractérisé en ce que l'on fait agir sur la face extérieure du tube une dispersion aqueuse contenant un produit de copolymérisation élastique dont la fraction

pondérale majoritaire des particules dispersées présente une taille égale ou inférieure à 0,08 μm, de préférence inférieure ou égale à 0,05 μm, en une quantité telle qu'il se forme sur la face extérieure du tube une couche constituée par 0,5 à 8 g de produit de copolymérisation par $m^2$ de surface de support, on élimine l'agent dispersant et ensuite on humidifie éventuellement le tube avec de l'eau.

22. Procédé selon la revendication 21, caractérisé en ce que la dispersion aqueuse de produit de copolymérisation utilisée contient une quantité comprise entre 5 et 10% en poids de produit de copolymérisation, par rapport au poids total de la dispersion.

23. Procédé selon la revendication 21 ou 22, caractérisé en ce que l'agent dispersant de la dispersion aqueuse contient un plastifiant chimique secondaire, en particulier de la glycérine, du glycol ou du polyglycol.

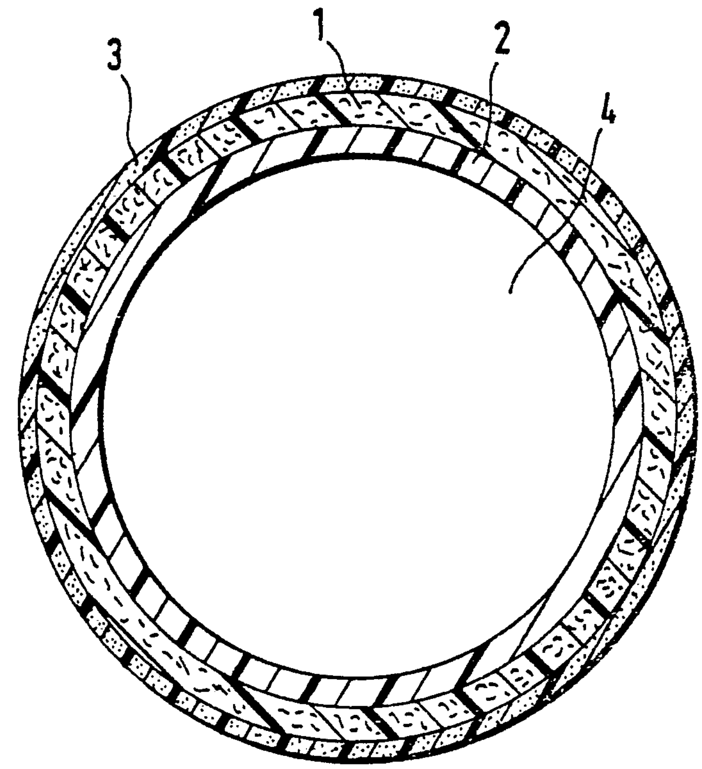
1
2
3
4